# FASCICULE DE BREVET EUROPEEN

(11) **EP 3 599 518 B1**
(45) Date de publication et mention de la délivrance du brevet: **25.02.2026**
(21) Numéro de dépôt: 18185320.1
(22) Date de dépôt: 24.07.2018
(51) Int. Cl.: G04B 19/26, G04G 9/00, G04B 49/00

(54) **PROCEDE DE CODAGE ET DE TRANSMISSION D'AU MOINS UNE HEURE SOLAIRE**
VERFAHREN ZUM KODIEREN UND ÜBERTRAGEN MINDESTENS EINER SONNENSTUNDE
METHOD FOR ENCODING AND TRANSMISSION OF AT LEAST ONE SOLAR TIME

(43) Date de publication de la demande: 29.01.2020
(73) Titulaire: ETA SA Manufacture Horlogère Suisse, 2540 Grenchen (CH)
(72) Inventeur: Bonnet, Thierry, 1205 Genève (CH); Husak, Jiri, 14000 Praha 4 (CZ)
(74) Mandataire: ICB SA

(56) Documents cités:
- WO-A2-2006/117059
- CN-A- 101 206 118
- US-A- 5 408 444
- US-A1- 2016 223 994

## Description

### Domaine technique

L'invention se rapporte à un procédé de codage et à un procédé de transmission d'au moins une heure solaire, ladite heure solaire étant fonction d'une position géographique et d'un jour de l'année. Par heure solaire, on entend par exemple l'heure du lever de soleil, l'heure du coucher de soleil, ou l'heure du zénith.

### Arrière-plan technologique

La durée du jour varie tout au long de l'année et dépend de la latitude et de la longitude où l'on se trouve. Cette variation est provoquée par l'inclinaison de l'axe de rotation de la Terre sur elle-même par rapport au plan de l'écliptique. On sait que la durée du jour est au plus court lors du solstice de décembre dans l'hémisphère nord, et de juin dans l'hémisphère sud. Lors des équinoxes, la durée du jour est égale à celle de la nuit sur toute la Terre. L'heure du lever et du coucher du soleil varie par conséquent en fonction non seulement du jour de l'année mais également de la position géographique précise où l'on se trouve.

On connait des montres électroniques et/ou connectées capables d'indiquer l'heure du lever et du coucher du soleil en fonction des variations saisonnières et de la position géographique du porteur de la montre. Ces montres intègrent généralement un système de localisation de manière à calculer l'heure du lever et du coucher du soleil par le biais d'un algorithme qui prend en compte lesdites données de localisation. Le système de localisation est par exemple un GPS, un module de triangulation utilisant la position de stations de base d'un réseau cellulaire (2, 3, 4 ou 5G) auquel est connectée la montre ou encore un module de localisation d'un routeur IP d'un réseau Internet auquel est connectée la montre.

Ces montres ont toutefois le désavantage de comporter un processeur dont la puissance de calcul est adaptée à la complexité de l'algorithme utilisé pour déterminer l'heure exacte en fonction du jour de l'année et de la position géographique du porteur de la montre. Par ailleurs, l'intégration d'un système de localisation dans une montre a un impact non négligeable sur le coût de la montre et son autonomie. WO 2006/117059 A2 divulgue le codage, le stockage et la détermination de l'heure locale (fuseaux horaires) sur des dispositifs horlogers utilisant la géolocalisation, notamment pour les montres.

### Résumé de l'invention

Le but de la présente invention est de pallier les inconvénients mentionnés précédemment.

A cet effet, l'invention se rapporte à un procédé de codage et de transmission d'au moins une heure solaire selon la revendication 1.

L'invention propose donc un procédé de codage et de transmission d'au moins une heure solaire de type lever de soleil ou coucher de soleil par exemple, apte à être mis en œuvre par un appareil électronique de type Smartphone, le procédé permettant de coder l'heure solaire sur un nombre de bits réduit. Les données codées pourront ainsi ensuite être transmises à une montre comportant un processeur dont la puissance de calcul est faible, puisque ladite montre n'aura pas à calculer elle-même l'heure solaire mais simplement à la décoder. Une telle montre n'aura donc pas à intégrer de moyens de localisation ni de processeur puissant.

L'invention se rapporte également à un procédé de transmission et de codage selon la revendication 8.

En outre, les procédés peuvent comprendre les caractéristiques des revendications dépendantes, prises seules ou selon toutes les combinaisons techniquement possibles.

### Brève description des figures

L'invention sera décrite ci-après de manière plus détaillée à l'aide des dessins annexés, donnés à titre d'exemples nullement limitatifs, dans lesquels :
- La figure 1 représente un organigramme représentant les étapes d'un procédé de codage d'une heure solaire selon un mode de réalisation non limitatif de l'invention,
- La figure 2 représente un tableau donnant les heures de lever, du zénith, et du coucher de soleil le premier jour de chaque mois pendant un an, pour la ville d'Ottawa,
- La figure 3 représente un procédé de transmission d'une pluralité d'heures solaires à une pièce d'horlogerie, selon un mode de réalisation non limitatif de l'invention,
- La figure 4 représente un graphe illustrant une interpolation linéaire permettant de calculer une heure solaire intermédiaire, selon un mode de réalisation non limitatif de l'invention,
- La figure 5 représente trois graphes illustrant l'évolution de l'heure du lever, du zénith et du coucher de soleil au cours d'une année, pour une ville prise à titre d'exemple.

### Description détaillée de l'invention

Les éléments identiques, par structure ou par fonction, apparaissant sur différentes figures conservent, sauf précision contraire, les mêmes références.

### • Procédé de codage P1

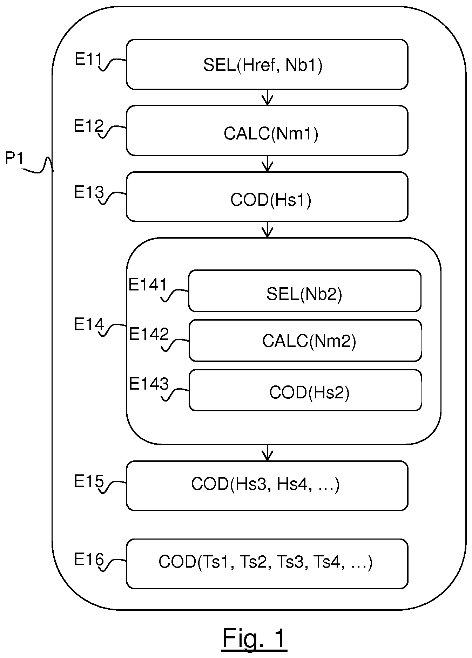

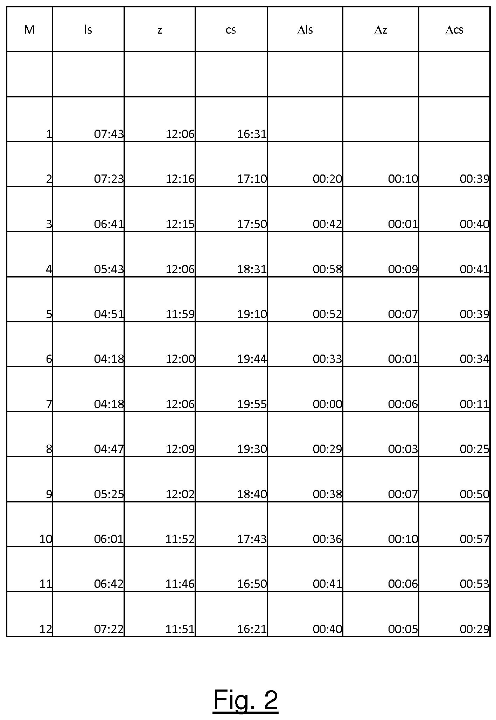

Le procédé de codage P1 d'une heure solaire, dite heure solaire initiale Hs1, est décrit en référence aux figures 1 et 2. Le procédé de codage P1 est apte à être mis en œuvre par un appareil électronique de type Smartphone.

L'heure solaire initiale Hs1 est associée à une localisation géographique Loc et à un jour J1 de l'année, qui est par exemple l'année en cours. Dans un exemple non limitatif, la localisation géographique Loc correspond à la ville d'Ottawa et le jour J1 de l'année est le 1^{er} du mois de Janvier (référencé 1 sur la figure 2). L'heure solaire initiale Hs1 est d'un des types suivants : lever de soleil (Is), zénith (z) ou coucher de soleil (cs).

Tel qu'illustré sur la figure 1, le procédé de codage P1 comprend les étapes suivantes.

A l'étape E11 illustrée SEL(Href, Nb1), une heure de référence Href et un nombre de bits initial Nb1 sont sélectionnés en fonction du type de l'heure solaire initiale Hs1.

Dans un mode de réalisation non limitatif, si l'heure solaire Hs1 est de type zénith, l'heure de référence est midi et le nombre de bits initial Nb1 vaut 8. Dans un mode de réalisation non limitatif, si l'heure solaire initiale Hs1 est de type lever de soleil, l'heure de référence est minuit et le nombre de bits initial Nb1 vaut 10. Dans un mode de réalisation non limitatif, si l'heure solaire initiale Hs1 est de type coucher de soleil, l'heure de référence est minuit et le nombre de bits initial Nb1 vaut 10.

A l'étape E12 illustrée CALC(Nm1), un nombre de minutes Nm1 séparant ladite heure solaire initiale Hs1 et l'heure de référence Href est calculé. Le nombre de minutes Nm1 est égal à la différence entre l'heure solaire initiale Hs1 et l'heure de référence Href.

On notera que l'heure initiale Hs1 est par exemple prédéterminée grâce à un algorithme de la NOAA « National Oceanic and Atmospheric Administration », connu de l'homme du métier, ou encore être récupérée via internet par l'appareil électronique.

Le tableau de la figure 2 illustre les heures de lever de soleil (Is), de zenith (z) et de coucher de soleil (cs) pour la ville d'Ottawa le 1^{er} de chacun des 12 mois (M) de l'année 2017.

Comme on peut le voir sur le tableau, si l'heure solaire initiale Hs1 est de type zénith, elle vaut 12h06 le 1er Janvier à Ottawa. L'heure solaire initiale Hs1 est donc séparée de 6 minutes par rapport à l'heure de référence, ici midi. Alternativement, si l'heure solaire initiale Hs1 est de type lever de soleil, elle vaut 7h43 le 1er Janvier à Ottawa. L'heure solaire initiale Hs1 est donc séparée de 463 minutes par rapport à l'heure de référence, ici minuit.

A l'étape E13 illustrée COD(Hs1), le nombre de minutes Nm1 est codé sur le nombre de bits initial Nb1. En reprenant l'exemple précédent d'Ottawa la premier janvier, si l'heure solaire initiale Hs1 est de type zénith, la valeur 6 est codée sur Nm1 bits, ici 6 bits. Alternativement, si l'heure solaire initiale Hs1 est de type lever de soleil, la valeur 463 est codée sur Nm1 bits, ici 10bits.

On note que les valeurs négatives doivent également pouvoir être codées (par exemple, supposons que l'heure solaire initiale est de type zénith, l'heure de référence est midi, et l'heure du zénith au jour de l'année considérée est 11h59 : il faut alors coder la valeur -1). Une valeur négative peut être codée de la manière suivante :
- on inverse les bits de l'écriture binaire de sa valeur absolue (opération binaire NON). Cette opération est également appelée le complément à un, et
- on ajoute 1 au résultat.

Ainsi, pour coder (-1) sur 8 bits :
- on code la valeur 1 sur 8 bits : 00000001,
- on inverse les bits : 111111110,
- on ajoute 1 : 11111111.

Dans un mode de réalisation non limitatif, le procédé de codage P1 comprend en outre une étape de codage E14 d'une première heure solaire supplémentaire Hs2 de même type que l'heure solaire initiale Hs1, associée à la même localisation Loc mais à un jour J2 de l'année différent.

Dans un mode de réalisation non limitatif, le jour J2 correspond au même quantième que le jour J1, mais au mois suivant. Ainsi, si le jour J1 est le 1^{er} Janvier d'une année, le jour J2 est le 1^{er} Février de la même année. Au lieu de correspondre au premier jour du mois, les jours J1 et J2 pourraient correspondre au 21^{ème} jour du mois.

L'étape de codage E14 comprend une sous-étape E141 illustrée SEL(Nb2), dans laquelle on sélectionne un nombre de bits supplémentaires Nb2 en fonction du type de l'heure solaire initiale Hs1.

Dans un mode de réalisation non limitatif, si l'heure solaire initiale Hs1 est de type lever de soleil, le nombre de bits supplémentaires Nb2 sélectionné est égal à 8 bits. Alternativement, si l'heure solaire initiale Hs1 est de type zénith, le nombre de bits supplémentaires Nb2 sélectionné est égal à 5 bits. Alternativement, si l'heure solaire initiale Hs1 est de type coucher de soleil, le nombre de bits supplémentaires Nb2 sélectionné est égal à 8 bits.

L'étape de codage E14 comprend une sous-étape E142 illustrée CALC(Nm2), dans laquelle un nombre de minutes Nm2 séparant la première heure solaire supplémentaire Hs2 et l'heure solaire initiale Hs1 est calculé.

Dans l'exemple non limitatif relatif à Ottawa où l'heure solaire initiale Hs1 est de type zénith et vaut 12h06 le 1^{er} janvier, la première heure supplémentaire Hs2 au 1^{er} février vaut 12h16. Le nombre de minutes Nm2 séparant l'heure solaire initiale Hs1 de la première heure supplémentaire Hs2 vaut alors 10. Dans l'exemple non limitatif relatif à Ottawa où l'heure solaire initiale Hs1 est de type lever de soleil et vaut 7h43 le 1^{er} janvier, la première heure supplémentaire Hs2 au 1^{er} février vaut 7h23. Le nombre de minutes Nm2 séparant l'heure solaire initiale Hs1 de la première heure supplémentaire Hs2 vaut alors 20.

L'étape de codage E14 comprend une sous-étape E143 illustrée COD(Hs2) dans laquelle ledit nombre de minutes Nm2 est codé sur le nombre de bits supplémentaires Nb2. Pour reprendre les exemples précédents, la valeur 10 est codée sur 5 bits, ou la valeur 20 est codée sur 8 bits.

Dans un mode de réalisation non limitatif, le procédé de codage P1 comprend en outre une étape E15 illustrée COD(Hs3, Hs4, ...) de codage d'une pluralité d'autres heures solaires supplémentaires Hs3, Hs4, .... Les autres heures solaires supplémentaires Hs3, Hs4, ... sont telles que la pluralité de jours J1, J2, J3, J4, ... associés aux heures solaires initiale Hs1 et supplémentaires Hs2, Hs3, Hs4, ... correspondent à un même quantième mais à des mois M1, M2, M3, M4, ... différents de l'année. Ainsi, pour reprendre l'exemple précédent, le jour J3 est le 1^{er} Mars, le jour J4 est le 1^{er} avril, etc. Alternativement, au lieu de correspondre au premier jour du mois, les jours J1, J2, J3, J4, ... pourraient correspondre au 21^{ème} jour du mois.

Pour chaque autre heure solaire supplémentaire Hs3, Hs4, ..., le nombre de minutes Nm3, Nm4, ... séparant l'autre heure solaire supplémentaire Hs3, Hs4, ... de l'heure solaire supplémentaire précédente Hs2, Hs3, ..., c'est-à-dire l'heure solaire supplémentaire correspondant au mois précédent, est calculé puis codé sur le nombre de bits supplémentaires Nb2. Dans l'exemple d'Ottawa où la première heure solaire supplémentaire Hs2 est de type coucher de soleil et vaut 17h10 au 1^{er} février, et où la troisième heure solaire supplémentaire Hs3 au 1^{er} mars vaut 17h50 : le nombre de minutes Nm3 séparant la troisième heure solaire supplémentaire Hs3 de l'heure solaire supplémentaire précédente (la deuxième heure solaire Hs2) vaut 40. La valeur 40 est alors codée sur 8 bits.

Dans une première variante de réalisation non limitative, l'étape E15 est réalisée pour une série de cinq heures solaires supplémentaires Hs2 à Hs6 de sorte à couvrir les 6 premiers mois de l'année. Dans ce cas, les nombres de minutes Nm1 à Nm6 relatifs à seulement six heures solaires seront transmises à une pièce d'horlogerie, et la pièce d'horlogerie pourra calculer les heures solaires Hs7 à Hs12 pour les 6 derniers mois de l'année par symétrie du début de l'année par rapport à la fin de l'année. Les heures solaires calculées pour les mois Hs7 à Hs12 seront imprécises, mais la précision atteinte peut être jugée suffisante. Alternativement, les heures solaires pour les 6 derniers mois de l'année pourraient être codées et transmises à la pièce d'horlogerie, et la pièce d'horlogerie pourrait en déduire par symétrie les heures solaires pour les 6 premiers mois de l'année. Alternativement, les heures solaires pour les 7 premiers, respectivement les 7 derniers mois de l'année pourraient être codées et transmises à la pièce d'horlogerie, et la pièce d'horlogerie pourrait en déduire par symétrie les heures solaires pour les 5 derniers, respectivement les 5 premiers mois de l'année. Naturellement, on note que le décalage d'heure d'été et d'heure d'hiver doit être pris en compte lors du calcul par symétrie.

Dans une deuxième variante de réalisation non limitative, l'étape E15 est réalisée pour une série de onze heures solaires supplémentaires Hs2 à Hs12 de sorte à couvrir tous les mois de l'année. Dans ce cas, les heures solaires seront toutes précisément connues par la pièce d'horlogerie, mais les données à transmettre seront plus volumineuses.

Dans une troisième variante de réalisation non limitative, l'étape E15 est réalisée pour une série de
Par ailleurs, dans un mode de réalisation non limitatif, outre le codage de l'heure solaire initiale Hs1 et d'une série d'heures solaires supplémentaires Hs2, Hs3, Hs4, ..., le procédé de codage P1 comprend en outre à l'étape E16 illustrée COD(Ts1, Ts2, Ts3, Ts4, ...) le codage d'une deuxième heure initiale, dite temps solaire initial Ts1, et d'une deuxième série d'heures supplémentaires, dites temps solaires supplémentaires Ts2, Ts3, Ts4, .... Les temps solaires Ts1, Ts2, Ts3, Ts4, ... et les heures solaires Hs1, Hs2, Hs3, Hs4, ... sont de type différent mais correspondent deux à deux aux mêmes jours J1, J2, J3, J4, ... de l'année.

Dans une première variante de réalisation non limitative, les temps solaires Ts1, Ts2, Ts3, Ts4, ... sont de type lever de soleil et les heures solaires Hs1, Hs2, Hs3, Ts4, ... sont de type coucher de soleil.

Dans une deuxième variante de réalisation non limitative, les temps solaires Ts1, Ts2, Ts3, Ts4, ... sont de type lever de soleil et les heures solaires Hs1, Hs2, Hs3, Ts4, ... sont de type zénith. Comme on va le voir par la suite, cela permet de calculer par symétrie une série d'heures solaires Gs1, Gs2, Gs3, Gs4, ... de type coucher de soleil.

Dans une troisième variante de réalisation non limitative, les temps solaires Ts1, Ts2, Ts3, ... sont de type coucher de soleil et les heures solaires Hs1, Hs2, Hs3, ... sont de type zénith. Comme on va le voir par la suite, cela permet de calculer par symétrie une série d'heures solaires Gs1, Gs2, Gs3, Gs4, ... de type lever de soleil.

Les temps solaires Ts1, Ts2, Ts3, Ts4, ... sont calculés de manière similaire aux heures solaires Hs1, Hs2, Hs3, Hs4, ....

### • Procédé de transmission P2

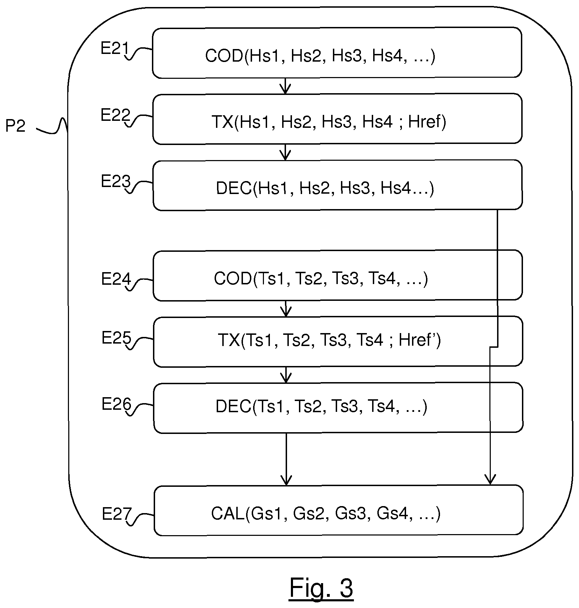

Le procédé de transmission P2 d'une pluralité d'heures solaires est décrit en référence aux figures 3 à 5. Le procédé de transmission P2 est apte à être mis en œuvre en partie par l'appareil électronique de type Smartphone et en partie par la pièce d'horlogerie.

Dans un mode de réalisation non limitatif, la pièce d'horlogerie est une montre électronique non connectée à affichage analogique.

Tel qu'illustré sur la figure 3, le procédé de transmission P2 comprend les étapes suivantes.

A l'étape E21 illustrée COD(Hs1, Hs2, Hs3, Hs4, ...), l'appareil électronique met en œuvre le procédé de codage P1, de sorte à coder une heure solaire initiale Hs1 et une pluralité d'heures solaires supplémentaires Hs2, Hs3, Hs4, ....

A l'étape E22 illustrée TX(Hs1, Hs2, Hs3, Hs4 ; Href...), les heures solaires Hs1, Hs2, Hs3, Hs4, ... codées sont transmises de l'appareil électronique à la pièce d'horlogerie. L'heure de référence Href utilisée pour coder les heures solaires est également transmise. Dans un mode de réalisation non limitatif, la transmission est effectuée via une liaison de communication optique, Bluetooth Low Energy ou une communication en champ proche NFC « Near Field Communication » en terminologie anglo-saxonne.

A l'étape E23 illustrée DEC(Hs1, Hs2, Hs3, Hs4, ...), la pièce d'horlogerie décode les heures solaires codées Hs1, Hs2, Hs3, Hs4, .... Du fait du faible nombre Nb1, Nb2 de bits utilisés pour leur codage, la pièce d'horlogerie peut ne comporter qu'un processeur peu puissant.

Dans l'exemple précédent où l'heure solaire initiale Hs1 est de type zénith et vaut 12h06 le 1^{er} janvier à Ottawa, la pièce d'horlogerie reçoit la valeur 6 codée sur Nm1=6 bits. La pièce d'horlogerie extrait cette valeur et l'additionne à l'heure de référence Href reçue (ici, midi). La pièce d'horlogerie détermine ainsi que l'heure solaire initiale Hs1 vaut 12h06.

De même, la pièce d'horlogerie extrait les valeurs codées sur Nm2 bits correspondant aux heures solaires supplémentaires Hs2, Hs3, Hs4, ... et les additionne respectivement :
- à l'heure solaire initiale Hs1 pour déterminer la première heure solaire supplémentaire Hs2,
- pour chaque heure solaire supplémentaire suivante Hs3, Hs4, ..., à l'heure solaire supplémentaire précédente Hs2, Hs3, ....

Dans l'exemple où l'heure solaire initiale Hs1 est de type zénith et vaut 12h06 le 1^{er} janvier à Ottawa, la pièce d'horlogerie reçoit et extrait la valeur 10 codée sur 5 bits et l'additionne à la valeur 12h06 pour déterminer la première heure solaire supplémentaire Hs2 : 12h16.

Dans l'exemple où la première heure solaire supplémentaire Hs2 est de type coucher de soleil et vaut 17h10 le 1^{er} février à Ottawa, la pièce d'horlogerie reçoit et extrait la valeur 40 codée sur 8 bits et l'additionne à la valeur 17h10 pour déterminer la troisième heure supplémentaire Hs3 : 17h50.

Puis, après avoir ainsi calculé les heures solaires Hs1, Hs2, Hs3, Hs4, ... pour les jours J1, J2, J3, J4, ... de l'année, la pièce d'horlogerie calcule les heures solaires intermédiaires pour tous les autres jours, par interpolation linéaire.

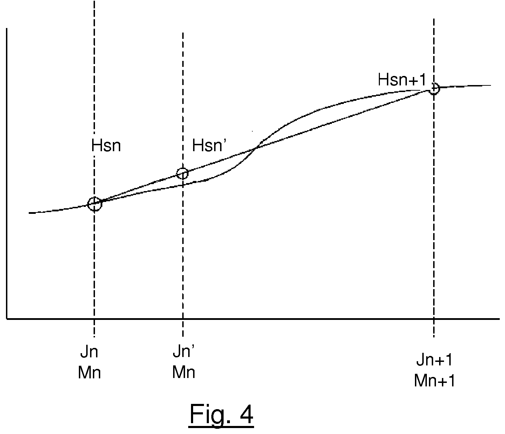

Ainsi, sur le graphe de la figure 4, la pièce d'horlogerie a décodé l'heure solaire Hsn du premier jour du mois Mn (Jn) et décodé l'heure solaire Hsn+1 du premier jour du mois Mn+1 (Jn+1). L'interpolation linéaire lui permet de calculer approximativement une heure solaire intermédiaire Hsn' pour un jour intermédiaire Jn' situé entre le jour Jn et le jour Jn+1.

Après avoir ainsi décodé toutes les heures solaires reçues et calculé par interpolation linéaire les heures solaires des jours intermédiaires, la pièce d'horlogerie a la connaissance des heures solaires pour chacun des jours de l'année.

Dans un mode de réalisation non limitatif préféré illustré sur la figure 3, le procédé de transmission P2 comprend en outre trois voire quatre étapes supplémentaires, réalisées à la suite ou en parallèle des trois étapes précédentes.

A l'étape E24 illustrée COD(Ts1, Ts2, Ts3, Ts4, ...), l'appareil électronique met en œuvre le procédé de codage P1, de sorte à coder une deuxième heure solaire initiale, dite temps solaire initial Ts1, et une deuxième série d'heures solaires supplémentaires, dites temps solaires supplémentaires Ts2, Ts3, Ts4, ..., les temps solaires Ts1, Ts2, Ts3, Ts4, ... et les heures solaires Hs1, Hs2, Hs3, Hs4, ... étant de type différent comme expliqué précédemment.

A l'étape E25 illustrée TX(Ts1, Ts2, Ts3, Ts4, ... ; Href'), les temps solaires Ts1, Ts2, Ts3, Ts4, ... codés sont transmis de l'appareil électronique à la pièce d'horlogerie. L'heure de référence Href' utilisée pour coder les temps solaires est également transmise. L'étape E25 est réalisée de manière similaire à l'étape E22.

A l'étape E26 illustrée DEC(Ts1, Ts2, Ts3, Ts4, ...), la pièce d'horlogerie décode les temps solaires codés Ts1, Ts2, Ts3, Ts4, .... L'étape E26 est réalisée de manière similaire à l'étape E23.

Puis, après avoir ainsi calculé les temps solaires Ts1, Ts2, Ts3, Ts4, ... pour les jours J1, J2, J3, J4, ... de l'année, la pièce d'horlogerie calcule les temps solaires intermédiaires pour tous les autres jours, par interpolation linéaire, comme expliqué précédemment.

Puis, dans le cas où les heures solaires Hs1, Hs2, Hs3, Hs4, ... sont de type zénith, à l'étape E27, la pièce d'horlogerie calcule par symétrie par rapport aux heures solaires une série d'autres heures solaires Gs1, Gs2, Gs3, Gs4, .... Si les temps solaires Ts1, Ts2, Ts3, Ts4, ... sont de type lever de soleil, la série d'heures solaires Gs1, Gs2, Gs3, Gs4, ... est de type coucher de soleil. Au contraire, si les temps solaires Ts1, Ts2, Ts3, Ts4, ... sont de type coucher de soleil, la série d'heures solaires Gs1, Gs2, Gs3, Gs4, ... est de type lever de soleil.

Le calcul par symétrie des heures solaires Gs1, Gs2, Gs3, Gs4, ... comprend :
- le calcul en minutes des différences entre les heures solaires Hs1, Hs2, Hs3, Hs4, ... et les temps solaires Ts1, Ts2, Ts3, Ts4, ... respectifs,
- le calcul de la série d'autres heures solaires Gs1, Gs2, ... chaque autre heure solaire GsX étant égale à l'heure solaire HsX correspondante plus ou moins le nombre de minutes calculé correspondant, selon si l'on calcule les heures du lever ou du coucher de soleil.

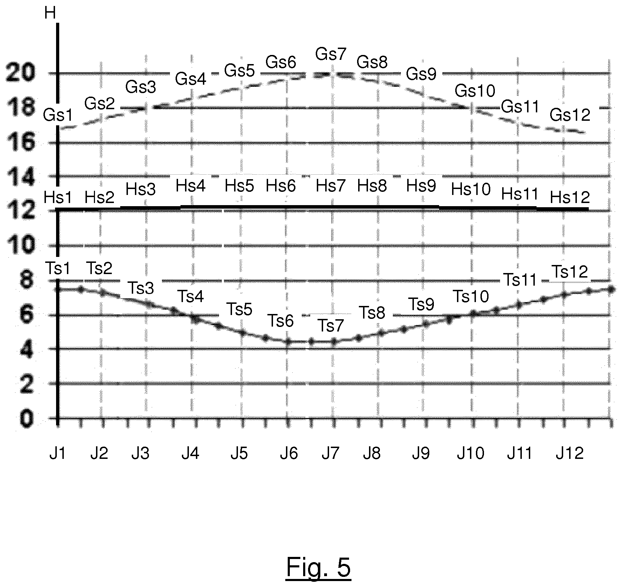

La figure 5 illustre un graphe dans lequel des heures solaires Hs1 à Hs12, des temps solaires Ts1 à Ts12 et des heures solaires Gs1 à Gs12 sont illustrés. Les jours J1 à J12 sont définis en abscisse, et les heures H en ordonnée.

Au jour J4, Ts4 est sensiblement égal à 6h, et Hs4 est sensiblement égal à 12h01 : la différence en minutes entre ces deux heures est donc égale à 361 minutes. On détermine alors Gs4 par le calcul suivant : 12h01 + 361 minutes, soit 1082 minutes, soit 18h03.

Puis, après avoir ainsi calculé les heures solaires Gs1, Gs2, Gs3, Gs4, ... pour les jours J1, J2, J3, J4, ... de l'année, la pièce d'horlogerie calcule les heures solaires intermédiaires pour tous les autres jours, par interpolation linéaire.

Grâce au procédé de transmission selon l'invention, la montre peut recevoir des informations lui permettant de calculer très simplement les heures solaires pour tous les jours d'une année, elle n'a donc pas besoin d'être connectée à internet ni de posséder un processeur puissant.

Bien entendu, la présente invention ne se limite pas à l'exemple illustré mais est susceptible de diverses variantes et modifications qui apparaîtront à l'homme du métier.

## Revendications

1. Procédé de codage (P1) et de transmission (P2) d'une heure solaire, dite heure solaire initiale (Hs1), associée à une localisation géographique (Loc) et à un jour (J1) de l'année, le procédé étant mis en œuvre par un appareil électronique de type Smartphone, le procédé comprenant les étapes suivantes:
- la sélection SEL(Href, Nb1) d'une heure de référence (Href) et d'un nombre de bits initial (Nb1) en fonction du type de l'heure solaire initiale (Hs),
- le calcul CALC(Nm1) d'un nombre de minutes (Nm1) séparant ladite heure solaire initiale (Hs1) et l'heure de référence (Href),
- le codage COD(Hs1) dudit nombre de minutes (Nm1) sur le nombre de bits initial (Nb1), et
- la transmission TX(Hs1) de l'heure solaire (Hs1) codée et de l'heure de référence (Href) de l'appareil électronique à une pièce d'horlogerie.

2. Procédé de codage (P1) et de transmission (P2) selon la revendication précédente, selon lequel ladite heure solaire initiale (Hs1) est d'un des types suivants : zénith (z), coucher de soleil (cs), lever de soleil (Is).

3. Procédé de codage (P1) et de transmission (P2) selon la revendication 2, selon lequel si l'heure solaire (Hs1) est de type zénith (z), l'heure de référence (Href) est 12h et le nombre de bits initial (Nb) vaut 6.

4. Procédé de codage (P1) et de transmission (P2) selon la revendication 2, selon lequel si l'heure solaire initiale (Hs) est de type lever de soleil (Is), l'heure de référence (Href) est minuit et le nombre de bits initial (Nb1) vaut 10.

5. Procédé de codage (P1) et de transmission (P2) selon la revendication 2, selon lequel si l'heure solaire initiale (Hs) est de type coucher de soleil (cs), l'heure de référence (Href) est minuit et le nombre de bits initial (Nb1) vaut 10.

6. Procédé de codage (P1) et de transmission (P2) selon l'une des revendications précédentes, comprenant une étape de codage d'une première heure solaire supplémentaire (Hs2) de même type que l'heure solaire initiale (Hs1), associée à la même localisation (Loc) mais à un jour (J2) de l'année différent, comprenant :
- la sélection SEL(Nb2) d'un nombre de bits supplémentaires (Nb2) en fonction du type des heures solaires (Hs1, Hs2),
- le calcul CALC(Nm2) d'un nombre de minutes (Nm2) séparant la première heure solaire supplémentaire (Hs2) et l'heure solaire initiale (Hs1),
- le codage COD(Hs2) dudit nombre de minutes (Nm2) sur le nombre de bits supplémentaires (Nb2), et
- la transmission TX(Hs1) de l'heure solaire supplémentaire (Hs2) codée de l'appareil électronique à la pièce d'horlogerie.

7. Procédé de codage (P1) et de transmission (P2) selon la revendication 6, comprenant des étapes de codage COD(Hs3, Hs4, ...) d'une pluralité d'heures solaires supplémentaires (Hs3, Hs4, ...) tels que la pluralité de jours (J1, J2, J3, J4, ...) associés aux heures solaire initiale et supplémentaires (Hs1, Hs2, Hs3, Hs4, ...) correspondent à un même quantième mais à des mois (M1,...M6) différents de l'année, chaque codage d'une heure supplémentaire (Hs3, Hs4, ...) comprenant un calcul d'un nombre de minutes (Nm3, Nm4, ...) la séparant de l'heure supplémentaire précédente (Hs2, Hs3, ...) et un codage dudit nombre de minutes (Nm3, Nm4, ...) sur le nombre de bits supplémentaires (Nb2), et la transmission TX(Hs3, Hs4, ...) des heures solaires supplémentaires (Hs3, Hs4, ...) codées de l'appareil électronique à la pièce d'horlogerie.

8. Procédé de codage (P1) et de transmission (P2) selon la revendication 7, d'une pluralité d'heures solaires (Hs1,... Hs6) à une pièce d'horlogerie, **caractérisé en ce qu'**il comprend le décodage DEC(Hs1, Hs2, Hs3, Hs4, ...) par la pièce d'horlogerie, des heures solaires codées (Hs1, Hs2, Hs3, Hs4, ...).

9. Procédé de codage (P1) et de transmission (P2) selon la revendication 8, **caractérisé en ce qu'**il comprend :
- la mise en œuvre par l'appareil électronique, du codage (P1), de sorte à coder COD(Ts1, Ts2, Ts3, Ts4, ...) une deuxième heure solaire initiale, dite temps solaire initial (Ts1), et une deuxième série d'heures solaires supplémentaires, dites temps solaires supplémentaires (Ts2, Ts3, Ts4, ...) par rapport à une deuxième heure de référence (Href'), les temps solaires (Ts1, Ts2, Ts3, Ts4, ...) et les heures solaires (Hs1, Hs2, Hs3, Hs4, ...) étant de type différent,
- la transmission TX(Ts1, Ts2, Ts3, Ts4, ... ; Href') des temps solaires (Ts1, Ts2, Ts3, Ts4, ...) codés et de la deuxième heure de référence (Href') de l'appareil électronique à la pièce d'horlogerie,
- le décodage DEC(Ts1, Ts2, Ts3, Ts4, ...), par la pièce d'horlogerie, des temps solaires codés (Ts1, Ts2, Ts3, Ts4, ...).

10. Procédé de codage (P1) et de transmission (P2) selon la revendication 9, **caractérisé en ce que** les temps solaires (Ts1, Ts2, Ts3, Ts4, ...) sont de type lever de soleil et les heures solaires (Hs1, Hs2, Hs3, Hs4, ...) sont de type zénith, ou bien les temps solaires (Ts1, Ts2, Ts3, Ts4, ...) sont de type coucher de soleil et les heures solaires (Hs1, Hs2, Hs3, Hs4, ...) sont de type zénith, le procédé comprenant, suite à l'étape de décodage DEC(Ts1, Hs2, Hs3, Hs4, ...) des heures solaires (Hs1, Hs2, Hs3, Hs4, ...) et de l'étape de décodage DEC(Ts1, Ts2, Ts3, Ts4, ...) des temps solaires (Ts1, Ts2, Ts3, Ts4, ...), un calcul par symétrie par rapport aux heures solaires (Hs1, Hs2, Hs3, Hs4, ...) d'une série d'autres heures solaires (Gs1, Gs2, Gs3, Gs4, ...) de type coucher de soleil si les temps solaires (Ts1, Ts2, Ts3, Ts4, ...) sont de type lever de soleil, ou de type lever de soleil si les temps solaires (Ts1, Ts2, Ts3, Ts4, ...) sont de type coucher de soleil.

11. Procédé de codage (P1) et de transmission (P2) selon l'une des revendications 8 à 10, dans lequel les mois (M1, M2, M3, M4, ...) associés aux heures solaires (Hs1, Hs2, Hs3, Hs4, ...) correspondent aux six premiers mois de l'année, le procédé comprenant, suite à l'étape de décodage desdites heures solaires (Hs1, Hs2, Hs3, Hs4, ...), un calcul par symétrie d'une pluralité d'heures solaires additionnelles (Hs7, Hs8, Hs9, Hs10, ...) associées à des mois (M7, M8, M9, M10, ...) correspondant aux six autres mois de l'année.

12. Procédé de codage (P1) et de transmission (P2) selon l'une des revendications 8 à 11, selon lequel l'étape de transmission (TX(Hs1, Hs2, Hs3, Hs4 ; Href), TX(Ts1, Ts2, Ts3, Ts4 ; Href')), est effectuée via une liaison de communication optique, Bluetooth Low Energy^{™} ou une communication en champ proche (NFC).

## Patentansprüche

1. Verfahren zum Kodieren (P1) und zum Übertragen (P2) einer Sonnenzeit, genannt anfängliche Sonnenzeit (Hs1), die mit einer geografischen Ortsangabe (Loc) und einem Tag (J1) des Jahres verknüpft ist, wobei das Verfahren von einem elektronischen Gerät vom Typ Smartphone ausgeführt wird und die folgenden Schritte umfasst:
- die Auswahl SEL(Href, Nb1) einer Referenzzeit (Href) und einer anfänglichen Bitanzahl (Nb1) in Abhängigkeit vom Typ der anfänglichen Sonnenzeit (Hs),
- die Berechnung CALC(Nm1) einer Anzahl von Minuten (Nm1), welche die genannte anfängliche Sonnenzeit (Hs1) und die Referenzzeit (Href) voneinander trennt,
- die Kodierung COD(Hs1) der genannten Minutenanzahl (Nm1) auf die anfängliche Bitanzahl (Nb1), und
- die Übertragung TX(Hs1) der kodierten Sonnenzeit (Hs1) und der Referenzzeit (Href) vom elektronischen Gerät an eine Uhr.

2. Verfahren zum Kodieren (P1) und zum Übertragen (P2) nach dem vorhergehenden Anspruch, wobei die genannte anfängliche Sonnenzeit (Hs1) einen der folgenden Typen aufweist: Zenit (z), Sonnenuntergang (es), Sonnenaufgang (Is).

3. Verfahren zum Kodieren (P1) und zum Übertragen (P2) nach Anspruch 2, wobei, falls die Sonnenzeit (Hs1) vom Typ Zenit (z) ist, die Referenzzeit (Href) 12 Uhr beträgt und die anfängliche Bitanzahl (Nb) 6 beträgt.

4. Verfahren zum Kodieren (P1) und zum Übertragen (P2) nach Anspruch 2, wobei, falls die anfängliche Sonnenzeit (Hs) vom Typ Sonnenaufgang (Is) ist, die Referenzzeit (Href) Mitternacht ist und die anfängliche Bitanzahl (Nb1) 10 beträgt.

5. Verfahren zum Kodieren (P1) und zum Übertragen (P2) nach Anspruch 2, wobei, falls die anfängliche Sonnenzeit (Hs) vom Typ Sonnenuntergang (es) ist, die Referenzzeit (Href) Mitternacht ist und die anfängliche Bitanzahl (Nb1) 10 beträgt.

6. Verfahren zum Kodieren (P1) und zum Übertragen (P2) nach einem der vorhergehenden Ansprüche, umfassend eine Stufe der Kodierung einer ersten zusätzlichen Sonnenzeit (Hs2) gleichen Typs wie die anfängliche Sonnenzeit (Hs1), die mit derselben Ortsangabe (Loc) verknüpft ist, jedoch einem anderen Tag (J2) des Jahres zugeordnet ist, umfassend:
- die Auswahl SEL(Nb2) einer zusätzlichen Bitanzahl (Nb2) in Abhängigkeit vom Typ der Sonnenzeiten (Hs1, Hs2),
- die Berechnung CALC(Nm2) einer Anzahl von Minuten (Nm2), welche die erste zusätzliche Sonnenzeit (Hs2) und die anfängliche Sonnenzeit (Hs1) voneinander trennt,
- die Kodierung COD(Hs2) der genannten Minutenanzahl (Nm2) auf die zusätzliche Bitanzahl (Nb2), und
- die Übertragung TX(Hs1) der kodierten zusätzlichen Sonnenzeit (Hs2) vom elektronischen Gerät an die Uhr.

7. Verfahren zum Kodieren (P1) und zum Übertragen (P2) nach Anspruch 6, umfassend Schritte des Kodierens COD(Hs3, Hs4, ...) einer Mehrzahl zusätzlicher Sonnenzeiten (Hs3, Hs4, ...), derart, dass die Vielzahl von Tagen (J1, J2, J3, J4, ...), die der anfänglichen und den zusätzlichen Sonnenzeiten (Hs1, Hs2, Hs3, Hs4, ...) zugeordnet sind, alle demselben Kalendertag entsprechen, jedoch unterschiedlichen Monaten (M1, ... M6) des Jahres zugeordnet sind, wobei jede Kodierung einer zusätzlichen Sonnenzeit (Hs3, Hs4, ...) eine Berechnung einer Anzahl von Minuten (Nm3, Nm4, ...) umfasst, die diese von der vorhergehenden zusätzlichen Sonnenzeit (Hs2, Hs3, ...) trennt, sowie eine Kodierung der genannten Minutenanzahl (Nm3, Nm4, ...) auf die zusätzliche Bitanzahl (Nb2), und die Übertragung TX(Hs3, Hs4, ...) der kodierten zusätzlichen Sonnenzeiten (Hs3, Hs4, ...) vom elektronischen Gerät an die Uhr.

8. Verfahren zum Kodieren (P1) und zum Übertragen (P2) nach Anspruch 7, von einer Mehrzahl von Sonnenzeiten (Hs1, ... Hs6) an eine Uhr, **dadurch gekennzeichnet, dass** es das Dekodieren DEC(Hs1, Hs2, Hs3, Hs4, ...) der kodierten Sonnenzeiten (Hs1, Hs2, Hs3, Hs4, ...) durch die Uhr umfasst.

9. Verfahren zum Kodieren (P1) und zum Übertragen (P2) nach Anspruch 8, **dadurch gekennzeichnet, dass** es Folgendes umfasst:
- die Durchführung der Kodierung (P1) durch das elektronische Gerät, um mittels COD(Ts1, Ts2, Ts3, Ts4, ...) eine zweite anfängliche Sonnenzeit, genannt anfängliche Sonnenzeit (Ts1), und eine zweite Reihe zusätzlicher Sonnenzeiten, genannt zusätzliche Sonnenzeiten (Ts2, Ts3, Ts4, ...), in Bezug auf eine zweite Referenzzeit (Href') zu kodieren, wobei die Sonnenzeiten (Ts1, Ts2, Ts3, Ts4, ...) und die Sonnenzeiten (Hs1, Hs2, Hs3, Hs4, ...) unterschiedlichen Typs sind,
- die Übertragung TX(Ts1, Ts2, Ts3, Ts4, ... ; Href) der kodierten Sonnenzeiten (Ts1, Ts2, Ts3, Ts4, ...) und der zweiten Referenzzeit (Href) vom elektronischen Gerät an die Uhr,
- das Dekodieren DEC(Ts1, Ts2, Ts3, Ts4, ...) der kodierten Sonnenzeiten (Ts1, Ts2, Ts3, Ts4, ...) durch die Uhr.

10. Verfahren zum Kodieren (P1) und zum Übertragen (P2) nach Anspruch 9, **dadurch gekennzeichnet, dass** die Sonnenzeiten (Ts1, Ts2, Ts3, Ts4, ...) vom Typ Sonnenaufgang sind und die Sonnenzeiten (Hs1, Hs2, Hs3, Hs4, ...) vom Typ Zenit sind, oder dass die Sonnenzeiten (Ts1, Ts2, Ts3, Ts4, ...) vom Typ Sonnenuntergang sind und die Sonnenzeiten (Hs1, Hs2, Hs3, Hs4, ...) vom Typ Zenit sind, wobei das Verfahren, im Anschluss an den Schritt des Dekodierens DEC(Ts1, Hs2, Hs3, Hs4, ...) der Sonnenzeiten (Hs1, Hs2, Hs3, Hs4, ...) und den Schritt des Dekodierens DEC(Ts1, Ts2, Ts3, Ts4, ...) der Sonnenzeiten (Ts1, Ts2, Ts3, Ts4, ...), ein Berechnen durch Symmetrie in Bezug auf die Sonnenzeiten (Hs1, Hs2, Hs3, Hs4, ...) einer Reihe weiterer Sonnenzeiten (Gs1, Gs2, Gs3, Gs4, ...) umfasst, die vom Typ Sonnenuntergang sind, wenn die Sonnenzeiten (Ts1, Ts2, Ts3, Ts4, ...) vom Typ Sonnenaufgang sind, oder vom Typ Sonnenaufgang sind, wenn die Sonnenzeiten (Ts1, Ts2, Ts3, Ts4, ...) vom Typ Sonnenuntergang sind.

11. Verfahren zum Kodieren (P1) und zum Übertragen (P2) nach einem der Ansprüche 8 bis 10, bei dem die den Sonnenzeiten (Hs1, Hs2, Hs3, Hs4, ...) zugeordneten Monate (M1, M2, M3, M4, ...) den ersten sechs Monaten des Jahres entsprechen, wobei das Verfahren nach dem Schritt des Dekodierens der genannten Sonnenzeiten (Hs1, Hs2, Hs3, Hs4, ...) ein Berechnen durch Symmetrie einer Mehrzahl zusätzlicher Sonnenzeiten (Hs7, Hs8, Hs9, Hs10, ...) umfasst, die Monaten (M7, M8, M9, M10, ...) zugeordnet sind, welche den übrigen sechs Monaten des Jahres entsprechen.

12. Verfahren zum Kodieren (P1) und zum Übertragen (P2) nach einem der Ansprüche 8 bis 11, bei dem der Übertragungsschritt (TX(Hs1, Hs2, Hs3, Hs4 ; Href), TX(Ts1, Ts2, Ts3, Ts4 ; Href')) über eine optische Kommunikationsverbindung, über Bluetooth Low Energy^{™} oder über eine Nahfeldkommunikation (Near Field Communication, NFC) durchgeführt wird.

## Claims

1. Method for coding (P1) and transmitting (P2) a solar time, called the initial solar time (Hs1), associated with a geographical location (Loc) and with a day (J1) of the year, the method being implemented by an electronic device of the Smartphone type, the method including the following steps:
- selecting SEL(Href, Nb1) a reference time (Href) and an initial number of bits (Nb1) as a function of the type of initial solar time (Hs),
- computing CALC(Nm1) a number of minutes (Nm1) separating said initial solar time (Hs1) and the reference time (Href),
- coding COD(Hs1) said number of minutes (Nm1) in the initial number of bits (Nb1), and
- transmitting TX (Hs1) the coded solar time (Hs1) and the reference time (Href) from the electronic device to a timepiece.

2. Coding (P1) and transmitting (P2) method according to the preceding claim, wherein said initial solar time (Hs1) is one of the following types: zenith (z), sunset (cs), sunrise (Is).

3. Coding (P1) and transmitting (P2) method according to claim 2, wherein if the solar time (Hs1) is of the zenith type (z), the reference time (Href) is 12 o'clock and the initial number of bits (Nb) is 6.

4. Coding (P1) and transmitting (P2) method according to claim 2, wherein if the initial solar time (Hs) is of the sunrise type (Is), the reference time (Href) is midnight and the initial number of bits (Nb1) is 10.

5. Coding (P1) and transmitting (P2) method according to claim 2, wherein if the initial solar time (Hs) is of the sunset type (cs), the reference time (Href) is midnight and the initial number of bits (Nb1) is 10.

6. Coding (P1) and transmitting (P2) method according to claim 1, including a step of coding a first additional solar time (Hs2) of the same type as the initial solar time (Hs1), associated with the same location (Loc) but with a different day (J2) of the year, including:
- selecting SEL(Nb2) a number of additional bits (Nb2) as a function of the type of solar times (Hs1, Hs2),
- computing CALC(Nm2) a number of minutes (Nm2) separating the first solar time (Hs2) and the initial solar time (Hs1),
- coding COD(Hs2) said number of minutes (Nm2) in the number of additional bits (Nb2), and
- transmitting TX (Hs1) the coded additional solar hour (Hs2) from the electronic device to the timepiece.

7. Coding (P1) and transmitting (P2) method according to claim 6, including steps of coding COD(Hs3, Hs4, ...) a plurality of additional solar times (Hs3, Hs4, ...) such that the plurality of days (J1, J2, J3, J4, ... associated with the initial and additional solar times (Hs1, Hs2, Hs3, Hs4, ...) correspond to the same day of the month but to different months ( M1,...M6) of the year, wherein each coding of an additional time (Hs3, Hs4,...) includes a computation of a number of minutes (Nm3, Nm4, ...) separating it from the preceding additional time (Hs2, Hs3, ...) and the coding of said number of minutes (Nm3, Nm4, ...) in a number of additional bits (Nb2), and the transmission TX (Hs3, Hs4, ...) of the coded additional solar hours (Hs3, Hs4, ...) from the electronic device to the timepiece.

8. Coding (P1) and transmitting (P2) method according to claim 7 of a plurality of solar times (Hs1, ... Hs6) to a timepiece, **characterized in that** the method includes:
decoding DEC(Hs1, Hs2, Hs3, Hs4, ...) by the timepiece of the coded solar times (Hs1, Hs2, Hs3, Hs4, ....).

9. Coding (P1) and transmitting (P2) method according to claim 8, **characterized in** the method includes:
- implementing, via the electronic device, the coding (P1), in order to code COD(Ts1, Ts2, Ts3, Ts4, ...) a second initial solar time, called the initial solar time (Ts1), and a second series of additional solar times, called additional solar times (Ts2, Ts3, Ts4, ...,) relative to a second reference time (Href'), the second solar times (Ts1, Ts2, Ts3, Ts4, ...) and solar times (Hs1, Hs2, Hs3, Hs4, ...) being of a different type,
- transmitting TX(Ts1, Ts2, Ts3, Ts4,...; Href') the coded solar times (Ts1, Ts2, Ts3, Ts4') and the second reference time (Href') from the electronic device to the timepiece,
- decoding DEC(Ts1, Ts2, Ts3, Ts4, ...) by the timepiece of the coded solar times (Ts1, Ts2, Ts3, Ts4, ....).

10. Coding (P1) and transmitting (P2) method according to claim 9, **characterized in that** the solar times (Ts1, Ts2, Ts3, Ts4, ...) are of the sunrise type and the solar times (Hs1, Hs2, Hs3, Hs4, ...) are of the zenith type, or the solar times (Ts1, Ts2, Ts3, Ts4, ...) are of the sunset type and the solar times (Hs1, Hs2, Hs3, Hs4, ...) are of the zenith type, wherein the method includes, following the step DEC(Hs1, Hs2, Hs3, Hs4, ...) of decoding the solar times (Hs1, Hs2, Hs3, Hs4, ...) and the step of decoding DEC(Ts1, Ts2, Ts3, Ts4, ...) the solar times (Ts1, Ts2, Ts3, Ts4, ...), a computation by symmetry relative to the solar times (Hs1, Hs2, Hs3, Hs4, ...) of a series of other solar times (Gs1, Gs2, Gs3, Gs4, ...) of the sunset type if the solar times (Ts1, Ts2, Ts3, Ts4, ...) are of the sunrise type, or of the sunrise type if the solar times (Ts1, Ts2, Ts3, Ts4, ...) are of the sunset type.

11. Coding (P1) and transmitting (P2) method according to any of claims 8 to 10, wherein the months (M1, M2, M3, M4, ...) associated with the solar times (Hs1, Hs2, Hs3, Hs4, ...) correspond to the first six months of the year, wherein the method includes, following the step of decoding said solar times (Hs1, Hs2, Hs3, Hs4, ...), a computation by symmetry of a plurality of additional solar times (Hs7, Hs8, Hs9, Hs10, ...) associated with the months (M7, M8, M9, M10, ...) corresponding to the other six months of the year.

12. Coding (P1) and transmitting (P2) method according to any of claims 8 to 11, wherein the transmission step (TX(Hs1, Hs2, Hs3, Hs4 ; Href), TX(Ts1, Ts2, Ts3, Ts4 ; Href')), is performed via an optical communication, Bluetooth Low Energy^{™} or near-field communication (NFC) link.
